# EUROPEAN PATENT APPLICATION

(11) **EP 4 775 853 A1**
(43) Date of publication of application: **15.07.2026**
(21) Application number: 23954365.5
(22) Date of filing: 29.09.2023
(51) Int. Cl.: F16J 9/06

(54) **OIL CONTROL RING**

(71) Applicant: NPR-RIKEN CORPORATION, Tokyo 102-8202 (JP)
(72) Inventor: HIRADE Yoshiyuki, Tokyo 102-8202 (JP); NAMBA Yukihiko, Tokyo 102-8202 (JP)
(74) Representative: Arnold & Siedsma
(86) International application number: PCT/JP2023/035691
(87) International publication number: WO 2025/069396

(57) **Abstract**

A three-piece oil control ring includes a pair of side rails and a spacer expander disposed between the pair of side rails. The spacer expander has a plurality of ear portions including abutment surfaces that abut on inner peripheral surfaces of the side rails. On the inner peripheral surfaces of the side rails, Rz in a predetermined initial conforming state is 2.5 µm or less. On the abutment surfaces of the ear portions, Rz in the predetermined initial conforming state is 2.0 µm or less. The side rails are made of alloy steel, and a Ni content of the side rails is 0.05 wt% or more and 0.60 wt% or less. The spacer expander is made of alloy steel, and a Ni content of the spacer expander is 2.9 wt% or more and 16.1 wt% or less.

## Description

### Technical Field

The present disclosure relates to an oil control ring.

### Background Art

In a related art, in a three-piece oil control ring including a pair of side rails and a spacer expander disposed between the pair of side rails, independent rotation of the side rails relative to the spacer expander can be one cause of an increase in oil consumption amount. For example, in the combination oil ring described in Patent Literature 1, blast treatment is applied to the inner peripheral surfaces of two side rails so that the surface roughness is 3 to 20 µm Rz, and independent rotation of the side rails relative to the spacer expander is suppressed.

### Citation List

### Patent Literature

Patent Literature 1: Japanese Unexamined Patent Publication No. 2001-132840

### Summary of Invention

### Technical Problem

In the related art described above, since the surface roughness of the inner peripheral surfaces of the side rails is increased by the blast treatment, wear of the ear portions of the spacer expander that abut on the inner peripheral surfaces of the side rails tends to increase. As a result, for example, there is a possibility of causing a decrease in tension of the oil control ring.

An object of the present disclosure is to provide an oil control ring capable of achieving both suppression of independent rotation of the side rails relative to the spacer expander and suppression of wear between the inner peripheral surfaces of the side rails and the ear portions of the spacer expander.

### Solution to Problem

One aspect of the present disclosure is a three-piece oil control ring including a pair of side rails and a spacer expander disposed between the pair of side rails, wherein the spacer expander has a plurality of ear portions including abutment surfaces that abut on inner peripheral surfaces of the side rails, wherein, on the inner peripheral surfaces of the side rails, Rz in a predetermined initial conforming state is 2.5 µm or less, wherein, on the abutment surfaces of the ear portions, Rz in the predetermined initial conforming state is 2.0 µm or less, wherein the side rails are made of alloy steel, and a Ni content of the side rails is 0.05 wt% or more and 0.60 wt% or less, and wherein the spacer expander is made of alloy steel, and a Ni content of the spacer expander is 2.9 wt% or more and 16.1 wt% or less.

According to the oil control ring according to one aspect of the present disclosure, an oil control ring that satisfies all four conditions of: the Ni content of the side rails being 0.05 wt% or more and 0.60 wt% or less; the Ni content of the spacer expander being 2.9 wt% or more and 16.1 wt% or less; Rz in the predetermined initial conforming state on the inner peripheral surfaces of the side rails being 2.5 µm or less; and Rz in the predetermined initial conforming state on the abutment surfaces of the ear portions being 2.0 µm or less, is less likely to cause independent rotation of the side rails relative to the spacer expander as compared with an oil control ring that does not satisfy at least one of the four conditions. Furthermore, according to the oil control ring that satisfies all four conditions, it is easier to suppress an increase in wear of the ear portions of the spacer expander that abut on the inner peripheral surfaces of the side rails, as compared with a case where the roughness of the inner peripheral surfaces of the side rails is increased by, for example, blast treatment or the like. Therefore, according to the oil control ring according to one aspect of the present disclosure, it is possible to achieve both suppression of independent rotation of the side rails relative to the spacer expander and suppression of wear between the inner peripheral surfaces of the side rails and the ear portions of the spacer expander.

In one embodiment, on the inner peripheral surfaces of the side rails, Rpk in the predetermined initial conforming state may be smaller than Rvk in the predetermined initial conforming state. On the abutment surfaces of the ear portions, Rpk in the predetermined initial conforming state may be larger than Rvk in the predetermined initial conforming state. On the inner peripheral surfaces of the side rails, Rpk in the predetermined initial conforming state is 0.51 µm or less and Rvk in the predetermined initial conforming state is 0.76 µm or less, and on the abutment surfaces of the ear portions, Rpk in the predetermined initial conforming state is 0.75 µm or less and Rvk in the predetermined initial conforming state may be 0.50 µm or less. In this case, due to the interaction between the height of the convex portions corresponding (correlated) to Rpk of the inner peripheral surfaces of the side rails and the depth of the concave portions corresponding (correlated) to Rvk of the ear portions, and the interaction between the depth of the concave portions corresponding (correlated) to Rvk of the inner peripheral surfaces of the side rails and the height of the convex portions corresponding (correlated) to Rpk of the ear portions, an engaging action is generated between each other and frictional force is improved. This makes it more likely to reduce Rz of the inner peripheral surfaces of the side rails while suppressing independent rotation of the side rails relative to the spacer expander.

In one embodiment, the Ni content of the side rails may be 0.26 wt% or more and 0.49 wt% or less, and the Ni content of the spacer expander may be 6.5 wt% or more and 11.1 wt% or less.

In one embodiment, a base material hardness of the side rails may be HV250 or more and 620 or less. Furthermore, the base material hardness of the side rails may be HV450 or more and 620 or less.

In one embodiment, an inclination angle of the abutment surfaces of the ear portions may be 15° or more and 25° or less. Furthermore, a width of the abutment surfaces of the ear portions may be 0.5 mm or more and 1.2 mm or less.

### Advantageous Effects of Invention

According to the oil control ring according to one aspect of the present disclosure, it is possible to achieve both suppression of independent rotation of the side rails relative to the spacer expander and suppression of wear between the inner peripheral surfaces of the side rails and the ear portions of the spacer expander.

### Brief Description of Drawings

[FIG. 1] FIG. 1 is a plan view illustrating a spacer expander used in an oil control ring according to an embodiment.
[FIG. 2] FIG. 2 is an enlarged perspective view of a region surrounded by an alternate long and short dash line in FIG. 1.
[FIG. 3] FIG. 3 is a cross-sectional view of the oil control ring in a state of being installed in a piston groove.
[FIG. 4] FIG. 4 is a schematic diagram of an apparatus used for evaluation of independent rotation of the side rails relative to the spacer expander.

### Description of Embodiments

Hereinafter, embodiments of the present disclosure will be described in detail with reference to the accompanying drawings.

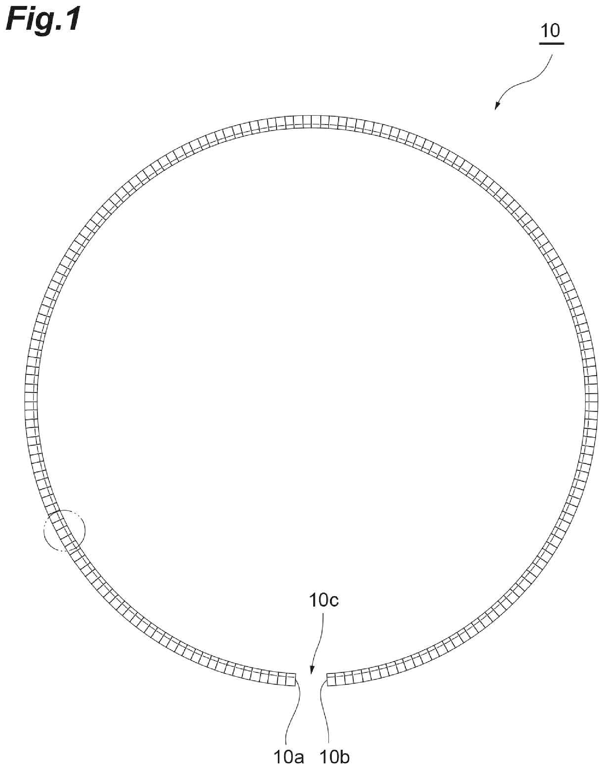

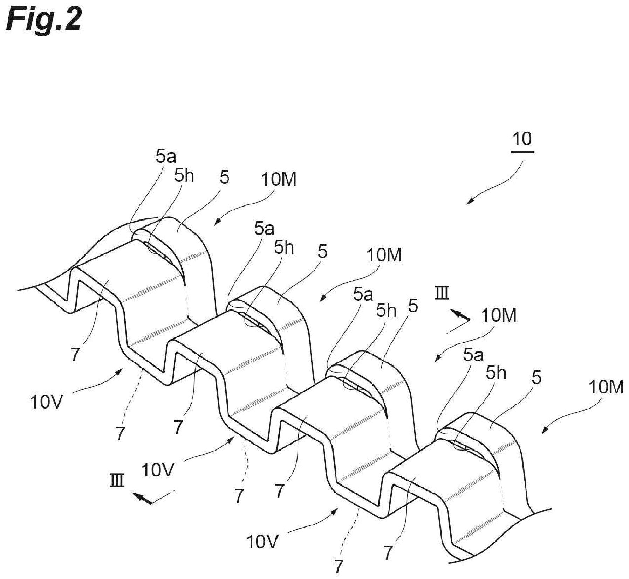

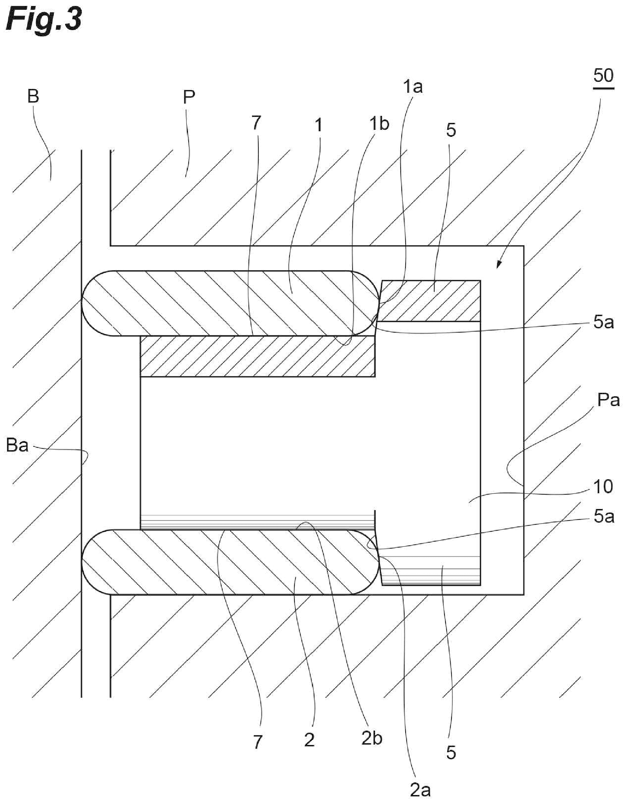

FIG. 1 is a plan view illustrating a spacer expander used in an oil control ring according to an embodiment. FIG. 2 is an enlarged perspective view of a region surrounded by an alternate long and short dash line in FIG. 1. FIG. 3 is a cross-sectional view of the oil control ring in a state of being installed in a piston groove. FIG. 3 corresponds to a cross section taken along line III-III of the spacer expander of FIG. 2.

As illustrated in FIGS. 1 to 3, an oil control ring 50 is a piston ring that is used by being installed in a groove Pa of a piston P. The oil control ring 50 is a three-piece oil control ring including a pair of side rails 1 and 2 and a spacer expander 10 disposed between the pair of side rails 1 and 2. The side rails 1 and 2 are annular and have inner peripheral surfaces 1a and 2a. It is noted that the term "annular" as used herein does not necessarily mean a closed circle, and the side rails 1 and 2 may have a gap portion. The cross-sectional shape of the side rails 1 and 2 is, for example, an arc surface shape in which the inner peripheral surfaces 1a and 2a are curved symmetrically in the vertical direction. The outer peripheral surface shape and the inner peripheral surface shape of the side rails may be different from those of the side rails 1 and 2 according to the present embodiment, and for example, may not necessarily have a cross-sectional shape having symmetry as illustrated in FIG. 3. The outer peripheral surfaces of the side rails 1 and 2 are in contact with an inner surface Ba of a cylinder bore B.

The spacer expander 10 is annular and has, for example, a gap portion 10c formed by two end surfaces 10a and 10b. The spacer expander 10 has a plurality of ear portions 5 including abutment surfaces 5a that abut on the inner peripheral surfaces 1a and 2a of the side rails 1 and 2. The spacer expander 10 has a plurality of rail facing portions 7 that respectively face side surfaces 1b and 2b of the side rails 1 and 2. The rail facing portion 7 is formed on the outer peripheral side of the ear portion 5 and at a position adjacent to the ear portion 5. The ear portion 5 is formed higher than the rail facing portion 7. The spacer expander 10 has an opening 5h formed by the ear portion 5 and the rail facing portion 7. In a state in which the side rails 1 and 2 are combined with the spacer expander 10, the inner peripheral surfaces 1a and 2a of the side rails 1 and 2 abut on the abutment surfaces 5a of the ear portions 5, and the rail facing portions 7 and the side surfaces 1b and 2b of the side rails 1 and 2 face each other.

As illustrated in FIG. 2, the spacer expander 10 has, for example, a shape in which crest portions 10M and valley portions 10V are alternately connected when placed on a workbench. For example, the ear portion 5 located at the crest portion 10M (upper side in FIG. 2) of the spacer expander 10 and the ear portion 5 located at the valley portion 10V (lower side in FIG. 2) have substantially the same shape. Similarly, the rail facing portion 7 located at the crest portion 10M (upper side in FIG. 2) of the spacer expander 10 and the rail facing portion 7 located at the valley portion 10V (lower side in FIG. 2) have substantially the same shape. Therefore, when the spacer expander 10 placed on the workbench is turned upside down, the crest portion 10M illustrated in FIG. 2 becomes the valley portion 10V, and the valley portion 10V becomes the crest portion 10M.

Details of the side rails 1 and 2 and the spacer expander 10 will be described. Hereinafter, the ear portion 5 and the abutment surface 5a located at the crest portion 10M of the spacer expander 10 will be described, and the description of the ear portion 5 and the abutment surface 5a located at the valley portion 10V will be omitted.

The side rails 1 and 2 are made of alloy steel. The alloy steel is, for example, a steel material to which Ni is added. A lower limit value of the Ni content of the side rails 1 and 2 is set to a value capable of suppressing independent rotation of the side rails 1 and 2 relative to the spacer expander 10. An upper limit value of the Ni content of the side rails 1 and 2 may be set to a value taking into account the influence on the workability of the side rails 1 and 2, for example. The upper limit value of the Ni content of the side rails 1 and 2 may be set to a value that takes into account the cost attributable to Ni.

Specifically, the Ni content of the side rails 1 and 2 is 0.05 wt% or more and 0.60 wt% or less. The Ni content of the side rails 1 and 2 may be 0.26 wt% or more and 0.49 wt% or less. The Ni content of the side rails 1 and 2 may be 0.10 wt% or more, may be 0.25 wt% or more, may be 0.26 wt% or more, or may be 0.30 wt% or more. The Ni content of the side rails 1 and 2 may be 0.55 wt% or less, may be 0.49 wt% or less, may be 0.45 wt% or less, or may be 0.40 wt% or less.

A base material hardness of the side rails 1 and 2 may be HV250 or more and 620 or less. The base material hardness of the side rails 1 and 2 may be HV450 or more and 620 or less. The base material hardness of the side rails 1 and 2 may be HV500 or more and 620 or less. By setting the base material hardness of the side rails 1 and 2 within such a range, it is possible to suppress wear of the inner peripheral surfaces 1a and 2a of the side rails 1 and 2 while suppressing wear of the ear portions 5 on which the inner peripheral surfaces 1a and 2a abut. Furthermore, in consideration of the risk of breakage of the side rails 1 and 2, the upper limit value of the base material hardness may be HV620. By suppressing wear of the inner peripheral surfaces 1a and 2a of the side rails 1 and 2, it becomes easier to suppress a decrease in tension of the oil control ring 50 and to suppress deterioration of oil consumption. It is noted that the side rails 1 and 2 may be subjected to surface treatment such as nitriding treatment, may be subjected to Parkerizing treatment for rust prevention, or may be left untreated.

The spacer expander 10 is made of alloy steel. The alloy steel can be, for example, stainless steel having a Ni content of 8.0 wt% or more and 10.5 wt% or less. The Ni content of the spacer expander 10 may be 2.9 wt% or more and 16.1 wt% or less. The Ni content of the spacer expander 10 may be 6.5 wt% or more and 11.1 wt% or less. The upper limit value of the Ni content of the spacer expander 10 may be set to a value that takes into account the influence on the workability of the spacer expander 10, for example. The upper limit value of the Ni content of the spacer expander 10 may be set to a value that takes into account the cost attributable to Ni. The spacer expander 10 can be manufactured, for example, by pressing (cutting and bending process and punching process) a plate of alloy steel. In the spacer expander 10, for example, the surface treatment is left untreated. The ear portions 5 of the spacer expander 10 may be subjected to surface treatment such as nitriding treatment. When wear of the ear portions 5 is suppressed by the nitriding treatment, it becomes easier to suppress a decrease in tension of the oil control ring 50.

In the spacer expander 10, the abutment surface 5a of the ear portion 5 is a substantially rectangular flat surface extending so as to intersect the radial direction of the spacer expander 10. The abutment surface 5a is not provided with, for example, a protrusion or a recess. The abutment surface 5a is an inclined surface that is inclined at a predetermined inclination angle with respect to the axial direction of the spacer expander 10. The inclination angle of the abutment surface 5a may be, for example, 15° or more and 25° or less, or may be 18° or more and 22° or less. By inclining the abutment surface 5a at this inclination angle, it becomes easier to suppress independent rotation of the side rails 1 and 2 relative to the spacer expander 10. When the inclination angle of the abutment surface 5a is within the above range, for example, in a state in which the oil control ring 50 is installed in the groove Pa of the piston P, the side surfaces of the side rails 1 and 2 on the opposite side from the side surfaces 1b and 2b tend to be pressed against the upper surface or the lower surface of the groove Pa. Therefore, friction is generated between the side surfaces on the opposite side from the side surfaces 1b and 2b and the upper surface or the lower surface of the groove Pa, and independent rotation of the side rails 1 and 2 is likely to be suppressed. When the inclination angle of the abutment surface 5a is smaller than the lower limit value of the above range, the above friction is less likely to occur. The upper limit value of the above range of the inclination angle of the abutment surface 5a may be set to a value at which the side rails 1 and 2 are less likely to ride up onto the upper surface of the upper ear portion 5 or the lower surface of the lower ear portion 5, in order to allow the oil control ring 50 to appropriately perform its function. The width of the abutment surface 5a may be, for example, 0.5 mm or more and 1.2 mm or less, may be 0.55 mm or more and 1.0 mm or less, or may be 0.6 mm or more and 0.8 mm or less. The width of the abutment surface 5a means a dimension of the abutment surface 5a along a direction orthogonal to the radial direction of the spacer expander 10 (a circumferential direction of the spacer expander 10 or a tangential direction along the circumferential direction). When the width of the abutment surface 5a of the ear portion 5 is 0.5 mm or more, the retention of the side rails 1 and 2 is less likely to decrease. When the width of the abutment surface 5a of the ear portion 5 is 1.2 mm or less, a decrease in surface pressure applied to the inner peripheral surfaces 1a and 2a of the side rails 1 and 2 is suppressed, and independent rotation is easily suppressed.

The side rails 1 and 2 and the spacer expander 10 are configured such that the roughness of the inner peripheral surfaces 1a and 2a and the roughness of the abutment surfaces 5a of the ear portions 5 fall within a certain range of values in a predetermined initial conforming state, from the viewpoint of suppressing independent rotation of the side rails 1 and 2 relative to the spacer expander 10.

The predetermined initial conforming state means a state in which the inner peripheral surfaces 1a and 2a of the side rails 1 and 2 and the abutment surfaces 5a of the ear portions 5 have undergone a certain degree of sliding at the initial stage of use of the oil control ring 50 and the surface roughness has stabilized. The predetermined initial conforming state may be, for example, a state after an engine incorporating the oil control ring 50 has actually undergone a predetermined conforming operation, or may be a state after a test or the like using a device that simulates the conforming operation of the engine has been performed. The predetermined initial conforming state generally does not mean an unused state immediately after manufacture of the oil control ring 50; however, for example, in a case where a state in which the surface roughness has stabilized after the above-described certain degree of sliding has been defined as an "unused state" by the manufacturer, the predetermined initial conforming state may include the unused state of the oil control ring 50. The state in which the surface roughness has stabilized after a certain degree of sliding may mean, for example, in a case where Parkerizing treatment has been applied for rust prevention, a state in which the Parkerizing treatment has worn away and the surface roughness has become the roughness of the base material. As one example, the predetermined initial conforming state may be a state after an evaluation test as shown in "Evaluation of Independent Rotation and Tension Decrease" in the examples described later.

On the inner peripheral surfaces 1a and 2a of the side rails 1 and 2, Rz in the predetermined initial conforming state is 2.5 µm or less. Rz is the maximum height Rz of the roughness curve specified in JIS B0601:2001, and is measured using a stylus-type surface roughness tester. On the inner peripheral surfaces 1a and 2a of the side rails 1 and 2, Rz in the predetermined initial conforming state may be 2.0 µm or less, may be 1.75 µm or less, or may be 1.5 µm or less. Such Rz of the inner peripheral surfaces 1a and 2a of the side rails 1 and 2 can be said to be a smaller Rz as compared with a case where the roughness of the inner peripheral surfaces of the side rails is increased by, for example, blast treatment or the like. Therefore, it becomes easier to suppress wear of the ear portions 5 of the spacer expander 10 that abut on the inner peripheral surfaces 1a and 2a of the side rails 1 and 2.

On the inner peripheral surfaces 1a and 2a of the side rails 1 and 2, Rpk in the predetermined initial conforming state is smaller than Rvk in the predetermined initial conforming state. Rpk is the reduced peak height (height of convex portions) Rpk specified in JIS B0671-2:2002, and is measured using a stylus-type surface roughness tester. Rvk is the reduced valley depth (depth of concave portions) Rvk specified in JIS B0671-2:2002, and is measured using a stylus-type surface roughness tester.

On the inner peripheral surfaces 1a and 2a of the side rails 1 and 2, Rpk in the predetermined initial conforming state may be 0.55 µm or less, may be 0.45 µm or less, or may be 0.30 µm or less. On the inner peripheral surfaces 1a and 2a of the side rails 1 and 2, from the viewpoint of suppressing wear, Rvk in the predetermined initial conforming state may be 0.80 µm or less, may be 0.70 µm or less, or may be 0.55 µm or less. On the inner peripheral surfaces 1a and 2a of the side rails 1 and 2, from the viewpoint of suppressing independent rotation of the side rails 1 and 2 relative to the spacer expander 10, Rvk in the predetermined initial conforming state may be 0.01 µm or more. From the viewpoint of suppressing independent rotation of the side rails 1 and 2 relative to the spacer expander 10, a ratio Rvk/Rpk of Rvk to Rpk on the inner peripheral surfaces 1a and 2a of the side rails 1 and 2 may be 1.25 or more, may be 1.45 or more, or may be 1.75 or more. As one example, on the inner peripheral surfaces 1a and 2a of the side rails 1 and 2, Rpk in the predetermined initial conforming state is 0.51 µm or less, and Rvk in the predetermined initial conforming state is 0.76 µm or less.

On the abutment surfaces 5a of the ear portions 5 of the spacer expander 10, Rz in the predetermined initial conforming state is 2.0 µm or less. On the abutment surfaces 5a of the ear portions 5, Rz in the predetermined initial conforming state may be 1.75 µm or less, may be 1.5 µm or less, or may be 1.25 µm or less.

On the abutment surfaces 5a of the ear portions 5, Rpk in the predetermined initial conforming state is larger than Rvk in the predetermined initial conforming state. On the abutment surfaces 5a of the ear portions 5, from the viewpoint of suppressing wear, Rpk in the predetermined initial conforming state may be 0.75 µm or less, may be 0.60 µm or less, may be 0.55 µm or less, or may be 0.50 µm or less. On the abutment surfaces 5a of the ear portions 5, from the viewpoint of suppressing independent rotation of the side rails 1 and 2 relative to the spacer expander 10, Rpk in the predetermined initial conforming state may be 0.01 µm or more. On the abutment surfaces 5a of the ear portions 5, Rvk in the predetermined initial conforming state may be 0.50 µm or less, may be 0.30 µm or less, or may be 0.20 µm or less. From the viewpoint of suppressing independent rotation of the side rails 1 and 2 relative to the spacer expander 10, a ratio Rpk/Rvk of Rpk to Rvk on the abutment surfaces 5a of the ear portions 5 may be 1.3 or more, may be 1.6 or more, or may be 1.8 or more. As one example, on the abutment surfaces 5a of the ear portions 5, Rpk in the predetermined initial conforming state is 0.75 µm or less, and Rvk in the predetermined initial conforming state is 0.50 µm or less.

Incidentally, in a three-piece oil control ring, one set of oil control ring is formed by sandwiching a spacer expander between a pair of side rails. Normally, a three-piece oil control ring is installed in a groove of a piston and can rotate in the circumferential direction as one set of oil control ring as a whole inside the groove. However, depending on the combination of the material of the side rails, the surface treatment of the side rails, and the surface treatment of the spacer expander, a phenomenon may occur in which the side rails rotate independently relative to the spacer expander (independent rotation). When independent rotation of the side rails relative to the spacer expander occurs, the circumferential positions of the gap portions of the upper and lower pair of side rails may become aligned. In this case, engine oil tends to rise into the combustion chamber, and the oil consumption amount may increase.

In this regard, the oil control ring 50 according to the present embodiment satisfies all four conditions: the Ni content of the side rails 1 and 2 is 0.05 wt% or more and 0.60 wt% or less; the Ni content of the spacer expander 10 is 2.9 wt% or more and 16.1 wt% or less; Rz on the inner peripheral surfaces 1a and 2a of the side rails 1 and 2 in the predetermined initial conforming state is 2.5 µm or less; and Rz on the abutment surfaces 5a of the ear portions 5 in the predetermined initial conforming state is 2.0 µm or less. The oil control ring 50 is less likely to exhibit independent rotation of the side rails 1 and 2 relative to the spacer expander 10 as compared with an oil control ring that does not satisfy at least one of the four conditions. Furthermore, according to the oil control ring 50, it is easier to suppress an increase in wear of the ear portions 5 of the spacer expander 10 that abut on the inner peripheral surfaces 1a and 2a of the side rails 1 and 2, as compared with a case where the roughness of the inner peripheral surfaces of the side rails is increased by, for example, blast treatment or the like. Therefore, according to the oil control ring 50, it is possible to achieve both suppression of independent rotation of the side rails 1 and 2 relative to the spacer expander 10 and suppression of wear between the inner peripheral surfaces 1a and 2a of the side rails 1 and 2 and the ear portions 5 of the spacer expander 10.

On the inner peripheral surfaces 1a and 2a of the side rails 1 and 2, Rpk in the predetermined initial conforming state is smaller than Rvk in the predetermined initial conforming state. On the abutment surfaces 5a of the ear portions 5, Rpk in the predetermined initial conforming state is larger than Rvk in the predetermined initial conforming state. On the inner peripheral surfaces 1a and 2a of the side rails 1 and 2, Rpk in the predetermined initial conforming state is 0.51 µm or less, and Rvk in the predetermined initial conforming state is 0.76 µm or less. On the abutment surfaces 5a of the ear portions 5, Rpk in the predetermined initial conforming state is 0.75 µm or less, and Rvk in the predetermined initial conforming state is 0.50 µm or less. According to this configuration, due to the interaction between the height of the convex portions corresponding (correlated) to Rpk of the inner peripheral surfaces 1a and 2a of the side rails 1 and 2 and the depth of the concave portions corresponding (correlated) to Rvk of the abutment surfaces 5a of the ear portions 5, and the interaction between the depth of the concave portions corresponding (correlated) to Rvk of the inner peripheral surfaces 1a and 2a of the side rails 1 and 2 and the height of the convex portions corresponding (correlated) to Rpk of the abutment surfaces 5a of the ear portions 5, an engaging action is generated between each other and frictional force is improved. This makes it easier to reduce Rz of the inner peripheral surfaces 1a and 2a of the side rails 1 and 2 while suppressing independent rotation of the side rails 1 and 2 relative to the spacer expander 10. Furthermore, the ratio Rvk/Rpk of Rvk to Rpk on the inner peripheral surfaces 1a and 2a of the side rails 1 and 2 may be 1.25 or more, may be 1.45 or more, or may be 1.75 or more. By increasing Rvk/Rpk on the inner peripheral surfaces 1a and 2a of the side rails 1 and 2 in this manner, the above-described engaging action is more likely to occur. Furthermore, the ratio Rpk/Rvk of Rpk to Rvk on the abutment surfaces 5a of the ear portions 5 may be 1.3 or more, may be 1.6 or more, or may be 1.8 or more. By increasing the ratio Rpk/Rvk of Rpk to Rvk on the abutment surfaces 5a of the ear portions 5 in this manner, the above-described engaging action is more likely to occur.

Incidentally, by adding Ni to the side rails 1 and 2, it is possible to enhance the affinity between the inner peripheral surfaces 1a and 2a of the side rails 1 and 2 and the abutment surfaces 5a of the ear portions 5. The affinity means an effect in which the inner peripheral surfaces 1a and 2a of the side rails 1 and 2 and the abutment surfaces 5a of the ear portions 5 become less likely to slip due to the side rails 1 and 2 and the spacer expander 10 each containing a certain amount of Ni (a so-called like-metal effect). It is expected that, due to such an improvement in affinity, the inner peripheral surfaces 1a and 2a of the side rails 1 and 2 and the abutment surfaces 5a of the ear portions 5 will conform to each other at an early stage at the initial stage of use of the oil control ring 50. In addition to the improvement in frictional force due to the above-described engaging action, the early conforming of the inner peripheral surfaces 1a and 2a of the side rails 1 and 2 and the abutment surfaces 5a of the ear portions 5 makes it easier to suppress independent rotation of the side rails 1 and 2 relative to the spacer expander 10.

The Ni content of the side rails 1 and 2 may be 0.26 wt% or more and 0.49 wt% or less. The Ni content of the spacer expander 10 may be 6.5 wt% or more and 11.1 wt% or less. By setting the Ni content as described above, a further improvement in the affinity as described above can be expected.

The base material hardness of the side rails 1 and 2 may be HV250 or more and 620 or less. Furthermore, the base material hardness of the side rails 1 and 2 may be HV450 or more and 620 or less. By setting the base material hardness of the side rails 1 and 2 within such a range, it is possible to suppress wear of the inner peripheral surfaces 1a and 2a of the side rails 1 and 2 while suppressing wear of the ear portions 5 on which the inner peripheral surfaces 1a and 2a abut.

The inclination angle of the abutment surfaces 5a of the ear portions 5 may be 15° or more and 25° or less, or may be 18° or more and 22° or less. Furthermore, the width of the abutment surfaces 5a of the ear portions 5 may be 0.5 mm or more and 1.2 mm or less, may be 0.55 mm or more and 1.0 mm or less, or may be 0.6 mm or more and 0.8 mm or less. When the width of the abutment surfaces 5a of the ear portions 5 is 0.5 mm or more, the retention of the side rails 1 and 2 is less likely to decrease. When the width of the abutment surfaces 5a of the ear portions 5 is 1.2 mm or less, a decrease in surface pressure applied to the inner peripheral surfaces 1a and 2a of the side rails 1 and 2 is suppressed, and independent rotation is easily suppressed. With such a configuration of the abutment surfaces 5a, it is possible to more reliably suppress independent rotation of the side rails 1 and 2 relative to the spacer expander 10.

Although the embodiments of the present disclosure have been described in detail above, the present disclosure is not limited to the above-described embodiments.

In the above embodiment, the cross-sectional shape of the side rails 1 and 2 is an arc surface shape in which the inner peripheral surfaces 1a and 2a are curved symmetrically in the vertical direction, but the present disclosure is not limited thereto. The inner peripheral surfaces 1a and 2a may be vertically asymmetric, or may have a shape other than an arc surface such as a tapered cross section, and may have a conventionally known shape.

In the above embodiment, all the ear portions 5 have substantially the same shape, but they do not necessarily have to have substantially the same shape.

### Examples

### (Examples 1 to 8)

A spacer expander made of a steel material to which Ni was added and a pair of side rails made of a steel material to which Ni was added were prepared, and oil control rings (nominal diameter: 80.5 mm, combined width dimension: 2.0 mm, combined thickness: 2.25 mm) satisfying all four conditions of: the Ni content of the side rails being 0.05 wt% or more and 0.60 wt% or less; the Ni content of the spacer expander being 2.9 wt% or more and 16.1 wt% or less; Rz of the inner peripheral surfaces of the side rails in the predetermined initial conforming state being 2.5 µm or less; and Rz of the abutment surfaces of the ear portions in the predetermined initial conforming state being 2.0 µm or less, were produced. Using a stylus-type surface roughness tester, the maximum height Rz of the roughness curve specified in JIS B0601:2001, the reduced peak height (height of convex portions) Rpk specified in JIS B0671-2:2002, and the reduced valley depth (depth of concave portions) Rvk specified in JIS B0671-2:2002 were measured. However, since the measurable portion was short, the measurement was performed with an evaluation length of 0.4 mm instead of the specified evaluation length. In the oil control rings according to Examples 1 to 8, the Ni content of the side rails, the base material hardness HV of the side rails, Rz of the inner peripheral surfaces, Rpk of the inner peripheral surfaces, and Rvk of the inner peripheral surfaces were as shown in Table 1. In the oil control rings according to Examples 1 to 8, the Ni content of the spacer expander, the base material hardness HV of the spacer expander, Rz of the abutment surfaces of the ear portions, Rpk of the abutment surfaces of the ear portions, and Rvk of the abutment surfaces of the ear portions were as shown in Table 1.

### (Comparative Examples 1 to 5)

A spacer expander made of a steel material to which Ni was added and a pair of side rails made of a steel material to which Ni was added were prepared, and oil control rings (nominal diameter: 80.5 mm, combined width dimension: 2.0 mm, combined thickness: 2.25 mm) not satisfying at least one of the four conditions of: the Ni content of the side rails being 0.05 wt% or more and 0.60 wt% or less; the Ni content of the spacer expander being 2.9 wt% or more and 16.1 wt% or less; Rz of the inner peripheral surfaces of the side rails in the predetermined initial conforming state being 2.5 µm or less; and Rz of the abutment surfaces of the ear portions in the predetermined initial conforming state being 2.0 µm or less, were produced. Using a stylus-type surface roughness tester, Rz, Rpk, and Rvk were measured. However, since the measurable portion was short, the measurement was performed with an evaluation length of 0.4 mm instead of the specified evaluation length. In the oil control rings according to Comparative Examples 1 to 5, the Ni content of the side rails, the base material hardness HV of the side rails, Rz of the inner peripheral surfaces, Rpk of the inner peripheral surfaces, and Rvk of the inner peripheral surfaces were as shown in Table 1. In the oil control rings according to Comparative Examples 1 to 5, the Ni content of the spacer expander, the base material hardness HV of the spacer expander, Rz of the abutment surfaces of the ear portions, Rpk of the abutment surfaces of the ear portions, and Rvk of the abutment surfaces of the ear portions were as shown in Table 1.

### <Evaluation of Independent Rotation and Tension Reduction>

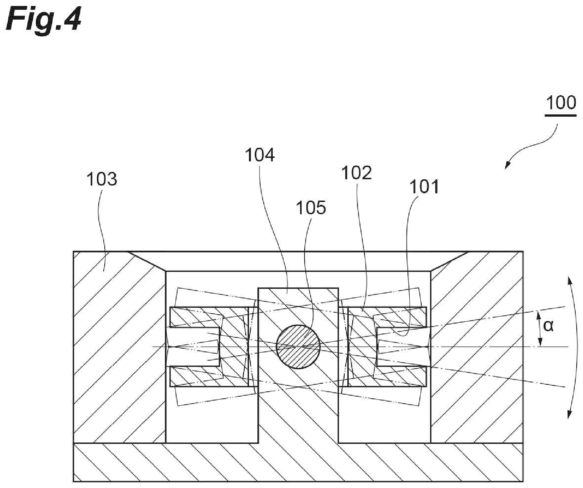

Independent rotation of the side rails relative to the spacer expander was evaluated using the apparatus illustrated in FIG. 4. The apparatus 100 illustrated in FIG. 4 is an apparatus for evaluating independent rotation of the side rails by installing an oil control ring in a holder (pseudo piston) 102 having a pseudo oil ring groove 101, and causing the holder to perform a swinging motion inside a cylinder (pseudo cylinder) 103 about a fulcrum 105 provided on a support column 104. It is noted that the central axis of the holder 102 and the central axis of the cylinder 103 were arranged offset from each other. This allowed evaluation to be performed under more severe conditions as compared with a case where the central axes of the two were not offset from each other.

In the test, first, the oil control ring was installed in the holder 102 such that the upper and lower two side rails were assembled offset by 30° in opposite directions from the position of the gap portion of the spacer expander, respectively, relative to the position of the gap portion of the spacer expander. The test was conducted by causing a swinging motion at a swinging angle α of 0.5° increments, from 0.5° to 7.5°, at a speed of 10 reciprocations per second for 10 minutes each. The ability to prevent independent rotation of the side rails was evaluated based on the magnitude of the swinging angle at which independent rotation of the side rails occurred. The larger the swinging angle at which independent rotation of the side rails occurred, the more it can be evaluated that the configuration is more capable of suppressing independent rotation of the side rails relative to the spacer expander. The results shown in Table 1 were obtained through the evaluation test.

**[Table 1]**

| | **Side Rail** | | | | | **Spacer Expander** | | | | **Independent Rotation Judgment** | | **Tension Reduction** | |
|---|---|---|---|---|---|---|---|---|---|---|---|---|---|
| | **Ni Content (wt%)** | **Base Material Hardness HV** | **Rz** | **Rpk** | **Rvk** | **Ni Content (wt%)** | **Rz** | **Rpk** | **Rvk** | **Judgment** | **Value** | **Judgment** | **Value** |
| **Example 1** | 0.05 | 543 | 1.37 | 0.44 | 0.55 | 2.96 | 1.51 | 0.64 | 0.35 | B | 5.5° | B | ▲5% |
| **Example 2** | 0.6 | 378 | 2.47 | 0.45 | 0.75 | 11.1 | 1.35 | 0.4 | 0.29 | A | 7.5° | B | ▲6% |
| **Example** 3 | 0.24 | 445 | 2.24 | 0.39 | 0.4 | 16.1 | 1.37 | 0.41 | 0.45 | B | 6.5° | A | ▲4% |
| **Example 4** | 0.26 | 443 | 1.98 | 0.51 | 0.76 | 9.31 | 1.78 | 0.75 | 0.47 | A | 7.0° | B | ▲5% |
| **Example 5** | 0.1 | 336 | 2.23 | 0.22 | 0.51 | 10.9 | 1.2 | 0.22 | 0.36 | B | 6.0° | B | ▲5% |
| **Example 6** | 0.49 | 616 | 1.75 | 0.23 | 0.61 | 8.09 | 1.45 | 0.49 | 0.27 | A | 7.5° | A | ▲3% |
| **Example 7** | 0.39 | 256 | 1.4 | 0.28 | 0.74 | 6.65 | 1.66 | 0.73 | 0.21 | A | 7.5° | B | ▲6% |
| **Example 8** | 0.35 | 480 | 1.38 | 0.39 | 0.7 | 8.78 | 1.25 | 0.47 | 0.15 | A | 7.5° | A | ▲3% |
| **Comparative Example 1** | 0.01 | 522 | 4.37 | 0.79 | 1.08 | 9.81 | 3.11 | 0.66 | 0.74 | B | 5.5° | C | ▲10% |
| **Comparative Example 2** | 0.03 | 352 | 2.45 | 0.73 | 0.81 | 16.1 | 1.98 | 0.35 | 0.5 | C | 3.5° | B | ▲7% |
| **Comparative Example 3** | 0.02 | 355 | 1.13 | 0.31 | 0.34 | 6.33 | 0.87 | 0.22 | 0.25 | C | 2.5° | A | ▲3% |
| **Comparative Example 4** | 0.13 | 281 | 2.87 | 0.85 | 0.53 | 2.82 | 1.5 | 0.46 | 0.35 | C | 4.5° | C | ▲9% |
| **Comparative Example 5** | 0.21 | 225 | 5.53 | 1.11 | 1.97 | 9.03 | 2.79 | 0.75 | 0.44 | A | 7.5° | C | ▲11% |

As shown in Table 1, in the oil control rings of Examples 2, 4, 6 to 8, the swinging angle α at which independent rotation of the side rails occurred was 7.0° or more (Judgment A). In the oil control rings of Examples 1, 3, and 5, the swinging angle α at which independent rotation of the side rails occurred was 5.5° or more and less than 7.0° (Judgment B). In Examples 1 to 8, the decrease in tension of the oil control ring (tension decrease rate) was 6% or less. In particular, in Examples 6 and 8, the tension decrease rate of the oil control ring was 3%. It is noted that the tension decrease rate is (ring tension before test - ring tension after test) / ring tension before test × 100 (%). The term "test" in "before test" and "after test" herein refers to the evaluation test shown in "Evaluation of Independent Rotation and Tension Decrease" in the present examples.

On the other hand, in the oil control rings of Comparative Examples 1 to 4, the swinging angle α at which independent rotation of the side rails occurred was less than 5.5° (Judgment C). In the oil control ring of Comparative Example 5, the swinging angle α at which independent rotation of the side rails occurred was 7.5°, but the tension decrease rate of the oil control ring was 11%. It is considered that the oil control ring of Comparative Example 5 was disadvantageous in suppressing wear between the inner peripheral surfaces of the side rails and the ear portions of the spacer expander because the Rz of the side rails was as large as 5.53. Therefore, it can be said that the oil control rings of Examples 1 to 8 achieve both suppression of independent rotation of the side rails relative to the spacer expander and suppression of wear between the inner peripheral surfaces of the side rails and the ear portions of the spacer expander, as compared with the oil control rings of Comparative Examples 1 to 5.

It is noted that the constituent features of various aspects of the present disclosure are described below.
[1] A three-piece oil control ring comprising a pair of side rails and a spacer expander disposed between the pair of side rails,
   wherein the spacer expander has a plurality of ear portions including abutment surfaces that abut on inner peripheral surfaces of the side rails,
   wherein, on the inner peripheral surfaces of the side rails, Rz in a predetermined initial conforming state is 2.5 µm or less,
   wherein, on the abutment surfaces of the ear portions, Rz in the predetermined initial conforming state is 2.0 µm or less,
   wherein the side rails are made of alloy steel, and a Ni content of the side rails is 0.05 wt% or more and 0.60 wt% or less, and
   wherein the spacer expander is made of alloy steel, and a Ni content of the spacer expander is 2.9 wt% or more and 16.1 wt% or less.
[2] The oil control ring according to [1],
   wherein, on the inner peripheral surfaces of the side rails, Rpk in the predetermined initial conforming state is smaller than Rvk in the predetermined initial conforming state.
[3] The oil control ring according to [1] or [2],
   wherein, on the abutment surfaces of the ear portions, Rpk in the predetermined initial conforming state is larger than Rvk in the predetermined initial conforming state.
[4] The oil control ring according to [3],
   wherein the inner peripheral surfaces of the side rails have Rpk in the predetermined initial conforming state of 0.51 µm or less and Rvk in the predetermined initial conforming state of 0.76 µm or less, and
   wherein the abutment surfaces of the ear portions have Rpk in the predetermined initial conforming state of 0.75 µm or less and Rvk in the predetermined initial conforming state of 0.50 µm or less.
[5] The oil control ring according to any one of [1] to [4],
   wherein the Ni content of the side rails is 0.26 wt% or more and 0.49 wt% or less, and
   wherein the Ni content of the spacer expander is 6.5 wt% or more and 11.1 wt% or less.
[6] The oil control ring according to any one of [1] to [5],
   wherein a base material hardness of the side rails is HV250 or more and 620 or less.
[7] The oil control ring according to [6],
   wherein the base material hardness of the side rails is HV450 or more and 620 or less.
[8] The oil control ring according to any one of [1] to [7],
   wherein an inclination angle of the abutment surfaces of the ear portions is 15° or more and 25° or less.
[9] The oil control ring according to any one of [1] to [8],
   wherein a width of the abutment surfaces of the ear portions is 0.5 mm or more and 1.2 mm or less.

### Industrial Applicability

According to the present disclosure, there is provided an oil control ring capable of achieving both suppression of independent rotation of the side rails relative to the spacer expander and suppression of wear between the inner peripheral surfaces of the side rails and the ear portions of the spacer expander.

### Reference Signs List

- 1, 2: SIDE RAIL
- 1a, 2a: INNER PERIPHERAL SURFACE
- 5: EAR PORTION
- 5a: ABUTMENT SURFACE
- 10: SPACER EXPANDER
- 50: OIL CONTROL RING

## Claims

1. A three-piece oil control ring comprising a pair of side rails and a spacer expander disposed between the pair of side rails,
wherein the spacer expander has a plurality of ear portions including abutment surfaces that abut on inner peripheral surfaces of the side rails,
wherein, on the inner peripheral surfaces of the side rails, Rz in a predetermined initial conforming state is 2.5 µm or less,
wherein, on the abutment surfaces of the ear portions, Rz in the predetermined initial conforming state is 2.0 µm or less,
wherein the side rails are made of alloy steel, and a Ni content of the side rails is 0.05 wt% or more and 0.60 wt% or less, and
wherein the spacer expander is made of alloy steel, and a Ni content of the spacer expander is 2.9 wt% or more and 16.1 wt% or less.

2. The oil control ring according to claim 1,
wherein, on the inner peripheral surfaces of the side rails, Rpk in the predetermined initial conforming state is smaller than Rvk in the predetermined initial conforming state.

3. The oil control ring according to claim 1 or 2,
wherein, on the abutment surfaces of the ear portions, Rpk in the predetermined initial conforming state is larger than Rvk in the predetermined initial conforming state.

4. The oil control ring according to claim 3,
wherein the inner peripheral surfaces of the side rails have Rpk in the predetermined initial conforming state of 0.51 µm or less and Rvk in the predetermined initial conforming state of 0.76 µm or less, and
wherein the abutment surfaces of the ear portions have Rpk in the predetermined initial conforming state of 0.75 µm or less and Rvk in the predetermined initial conforming state of 0.50 µm or less.

5. The oil control ring according to claim 1 or 2,
wherein the Ni content of the side rails is 0.26 wt% or more and 0.49 wt% or less, and
wherein the Ni content of the spacer expander is 6.5 wt% or more and 11.1 wt% or less.

6. The oil control ring according to claim 1 or 2,
wherein a base material hardness of the side rails is HV250 or more and 620 or less.

7. The oil control ring according to claim 6,
wherein the base material hardness of the side rails is HV450 or more and 620 or less.

8. The oil control ring according to claim 1 or 2,
wherein an inclination angle of the abutment surfaces of the ear portions is 15° or more and 25° or less.

9. The oil control ring according to claim 1 or 2,
wherein a width of the abutment surfaces of the ear portions is 0.5 mm or more and 1.2 mm or less.
